# FASCICULE DE BREVET EUROPEEN

(11) **EP 2 685 875 B1**
(45) Date de publication et mention de la délivrance du brevet: **09.12.2020**
(21) Numéro de dépôt: 12708145.3
(22) Date de dépôt: 13.03.2012
(51) Int. Cl.: A47J 45/07, A47J 36/16

(54) **ACCESSOIRE DE CUISSON COMPORTANT UN SUPPORT DE CUISSON ET UNE POIGNEE DE PREHENSION AMOVIBLE**
KOCHZUBEHÖR MIT KOCHAUFLAGE UND ABNEHMBAREM GRIFF
COOKING ACCESSORY COMPRISING A COOKING SUPPORT AND A REMOVABLE GRIPPING HANDLE

(30) Priorité: 16.03.2011 FR 1152154
(43) Date de publication de la demande: 22.01.2014
(73) Titulaire: SEB S.A., 69130 Ecully (FR)
(72) Inventeur: REINER, Guillaume, F-38000 Grenoble (FR); BIZARD, Jean-Claude, F-21121 Fontaine Les Dijon (FR)
(74) Mandataire: SEB Développement
(86) Numéro de dépôt international: PCT/EP2012/054404
(87) Numéro de publication internationale: WO 2012/123464

(56) Documents cités:
- WO-A1-2004/105565
- WO-A1-2007/032614
- WO-A1-2011/025113
- WO-A2-2009/147489
- US-A1- 2005 220 955
- US-A1- 2008 006 645
- US-A1- 2009 095 169
- US-A1- 2011 017 750

## Description

La présente invention concerne le domaine technique des accessoires de cuisson comportant un support de cuisson et une poignée de préhension amovible.

Ces accessoires de cuisson peuvent notamment être utilisés dans un ustensile de cuisson tel qu'une casserole ou un faitout, et/ou dans un appareil électrique de cuisson.

La présente invention concerne plus particulièrement, mais non exclusivement, les accessoires de cuisson du type précité utilisés dans un appareil électrique de cuisson comportant une enceinte de cuisson et un support de cuisson agencé dans l'enceinte de cuisson.

La présente invention concerne notamment, mais non exclusivement, les appareils électriques de cuisson comportant un dispositif de chauffage à flux chauffant et une enceinte de cuisson logant un support amovible de cuisson.

Le document WO 2007 088279 divulgue un appareil électrique de cuisson comprenant une enceinte de cuisson et un dispositif de chauffe conçu pour générer un flux chauffant dans l'enceinte de cuisson, ainsi qu'une cuve amovible comportant une poignée de préhension montée mobile entre une configuration relevée de manipulation et une configuration repliée de rangement.

Le document WO 2010 081322 divulgue un appareil électrique de cuisson comprenant une enceinte de cuisson et un dispositif de chauffe conçu pour générer un flux chauffant dans l'enceinte de cuisson, ainsi qu'une cuve amovible et une poignée de préhension amovible prévue pour venir en prise sur le bord supérieur de la cuve.

Le document US2009095169 divulgue un accessoire de cuisson selon les caractéristiques du préambule de la revendication 1.

Un but de la présente invention est de faciliter le déplacement d'un accessoire de cuisson comportant un support de cuisson et une poignée de préhension amovible.

Un autre but de la présente invention est de faciliter la mise en place et le retrait d'un support de cuisson amovible dans un appareil du type précité.

Un autre but de la présente invention est de réduire l'encombrement d'un accessoire de cuisson du type précité.

Ces buts sont atteints avec un accessoire de cuisson, notamment pour appareil électrique de cuisson, comportant un unique support de cuisson et une poignée de préhension amovible, le support de cuisson présentant un unique organe de préhension, la poignée de préhension amovible étant prévue pour être montée sur l'organe de préhension pour soulever le support de cuisson, un corps principal de la poignée de préhension amovible étant allongé, le support de cuisson comportant une ou plusieurs zones de réception d'aliments agencées en périphérie de l'organe de préhension, du fait que la ou les zones de réception d'aliments entourent l'organe de préhension, et que la poignée de préhension amovible montée sur l'organe de préhension s'étend au-dessus de la ou de l'une au moins des zones de réception d'aliments. Cette disposition permet de limiter le porte-à-faux du support de cuisson soulevé par la poignée de préhension. La zone de préhension de la poignée de préhension amovible peut ainsi être disposée au moins partiellement au-dessus du support de cuisson, et non uniquement en périphérie du support de cuisson. Cette disposition permet également de réduire l'encombrement en hauteur de l'accessoire de cuisson.

Selon une forme de réalisation préférée, le support de cuisson comporte un bord latéral et l'organe de préhension est entouré au moins partiellement par le bord latéral. Si désiré le bord latéral peut être discontinu. Avantageusement, le bord latéral est relevé.

Avantageusement alors, l'organe de préhension s'élève plus haut que le bord latéral du support de cuisson. Cette disposition permet de faciliter le montage de la poignée de préhension amovible sur l'organe de préhension.

Avantageusement, l'organe de préhension est agencé en position centrale sur le support de cuisson. Cette disposition permet de favoriser l'équilibrage du support de cuisson soulevé par la poignée de préhension.

Avantageusement encore, le support de cuisson présente une configuration circulaire. Cette disposition est particulièrement adaptée à un support de cuisson entraîné en rotation.

Avantageusement encore, la ou au moins l'une des zones de réception d'aliments présente des conformations en relief. Cette disposition permet de faire cuire des aliments en favorisant l'écoulement du jus ou de la graisse hors des aliments.

Avantageusement alors, les conformations en relief sont formées par des nervures concentriques. Cette disposition permet de faciliter la rétention des liquides de cuisson lorsque le support de cuisson est légèrement incliné.

Avantageusement encore, la poignée de préhension amovible comporte un élément de retenue monté mobile contre un moyen de rappel élastique. Cette disposition permet un maintien efficace du support de cuisson et permet aussi de retirer aisément la poignée de préhension amovible du support de cuisson.

Selon une forme de réalisation avantageuse, l'élément de retenue appartient à un coulisseau monté mobile en translation contre le moyen de rappel élastique sur un corps principal de la poignée de préhension amovible.

Ces buts sont atteints aussi avec un appareil électrique de cuisson comportant une enceinte de cuisson et un dispositif de chauffe conçu pour générer un flux chauffant dans l'enceinte de cuisson, l'enceinte de cuisson logeant un support de cuisson amovible, du fait que le support de cuisson appartient à un accessoire de cuisson selon l'une des caractéristiques précitées. La poignée de préhension amovible de l'accessoire de cuisson précité est en effet bien adaptée à la manipulation d'un support de cuisson chaud contenant des aliments chauds.

Selon une forme de réalisation avantageuse, l'enceinte de cuisson est délimitée par un corps de boîtier surmonté d'un couvercle. Dans un appareil du type précité, le support de cuisson doit être généralement soulevé, à la différence des fours présentant une porte latérale, dans lesquels les plats de cuisson peuvent être translatés sur les grilles de support pour être sortis de l'enceinte de cuisson.

Avantageusement alors, le couvercle est monté pivotant sur le corps de boîtier. L'accessoire de cuisson proposé peut être retiré aisément sans nécessiter un relevage du couvercle proche de la verticale.

Selon une forme de réalisation avantageuse, le support de cuisson repose sur un moyeu entraîné en rotation. Cette disposition permet d'obtenir une cuisson plus homogène.

Selon une forme de réalisation avantageuse, une cuve amovible est agencée dans l'enceinte de cuisson. Cette disposition permet notamment de faciliter le retrait des aliments ainsi que le netttoyage de l'appareil.

Avantageusement alors, la cuve amovible présente un élément de préhension latéral s'étendant hors de l'enceinte de cuisson. Cette disposition permet de retirer la cuve amovible de l'enceinte de cuisson après une opération de cuisson.

Avantageusement alors, l'élément de préhension latéral présente une conformation supérieure prévue pour porter la poignée de préhension amovible. L'utilisateur peut ainsi conserver la poignée de préhension amovible à portée de main lors d'une opération de cuisson. Cette disposition permet également de ranger la poignée de préhension amovible en dehors des périodes d'utilisation de l'appareil. Cette caractéristique concerne une poignée de préhension amovible prévue pour être montée sur un organe de préhension d'un support de cuisson, mais n'est pas nécessairement limitée à une poignée de préhension amovible prévue pour être montée sur un organe de préhension d'un support de cuisson comportant une ou plusieurs zones de réception d'aliments agencées en périphérie de l'organe de préhension.

Cette invention concerne alors un appareil électrique de cuisson comportant une enceinte de cuisson et un dispositif de chauffe conçu pour générer un flux chauffant dans l'enceinte de cuisson, l'enceinte de cuisson logeant un support de cuisson amovible, une cuve amovible étant agencée dans l'enceinte de cuisson, la cuve amovible présentant un élément de préhension latéral s'étendant hors de l'enceinte de cuisson, dans lequel l'élément de préhension latéral présente une conformation supérieure prévue pour porter une poignée de préhension amovible prévue pour être montée sur un organe de préhension du support de cuisson.

Selon une forme de réalisation avantageuse permettant d'obtenir un appareil plus compact en configuration de rangement, l'élément de préhension latéral est mobile entre une position abaissée et une position relevée, l'élément de préhension latéral porte un bouton de blocage en position relevée et le bouton de blocage en position relevée de l'élément de préhension latéral est accessible lorsque l'élément de préhension latéral porte la poignée de préhension amovible.

Selon une construction avantageuse, la poignée de préhension amovible présente deux montants écartés et le bouton de blocage en position relevée de l'élément de préhension latéral s'étend entre les deux montants lorsque l'élément de préhension latéral porte la poignée de préhension amovible.

Selon une forme de réalisation avantageuse permettant un accrochage de la de la poignée de préhension amovible sur l'élément de préhension latéral de la cuve amovible, le corps principal de la poignée de préhension amovible comporte un organe d'accrochage prévu pour venir en prise avec un organe de retenue de l'élément de préhension latéral et le coulisseau de la poignée de préhension amovible présente un autre organe d'accrochage prévu pour venir en prise avec un autre organe de retenue de l'élément de préhension latéral.

L'invention sera mieux comprise à l'étude d'un exemple de réalisation et d'une variante, pris à titre nullement limitatif, illustrés dans les figures annexées, dans lesquelles :
- la figure 1 est une vue en éclaté d'un appareil électrique de cuisson comportant une poignée amovible pour accessoire de cuisson selon l'invention,
- la figure 2 est une vue en perspective d'un support de cuisson illustré sur la figure 1,
- la figure 3 est une vue en élévation et en coupe du support de cuisson illustré sur les figures 1 et 2,
- la figure 4 est une vue de côté en perspective de la poignée amovible illustrée sur la figure 1,
- la figure 5 est une vue de dessus en perspective de la poignée amovible illustrée sur les figures 1 et 4,
- la figure 6 est une vue de dessus en perspective et en section partielle de la poignée amovible illustrée sur les figures 1, 4 et 5,
- la figure 7 est une vue de dessus en perspective du coulisseau de la poignée amovible illustrée sur les figures 1, 4, 5 et 6,
- la figure 8 est une vue de dessous en perspective du coulisseau de la poignée amovible illustrée sur les figures 1, 4, 5 et 6,
- la figure 9 est une vue de dessus en perspective du corps de la poignée amovible illustrée sur les figures 1, 4, 5 et 6,
- la figure 10 est une vue en élévation de la poignée amovible illustrée sur les figures 1, 4, 5 et 6 montée sur le support de cuisson illustré sur les figures 1 à 3,
- la figure 11 est une vue partielle de dessus en perspective du support de cuisson illustré sur les figures 1 à 3, sur lequel est monté la poignée amovible illustrée sur les figures 1, 4, 5 et 6,
- la figure 12 est une vue en perspective d'un élément de préhension latéral en position relevée monté sur une cuve de l'appareil électrique de cuisson illustré sur la figure 1,
- la figure 13 est une vue en perspective de l'élément de préhension latéral illustré sur la figure 12, portant la poignée amovible illustrée sur les figures 1, 4, 5 et 6,
- la figure 14 est une vue en perspective et en coupe partielle de la poignée amovible illustrée sur les figures 1, 4, 5 et 6, montée sur l'élément de préhension latéral illustré sur les figures 12 et 13,
- la figure 15 est une vue en élévation et en coupe de l'élément de préhension latéral en position relevée illustré sur les figures 12 à 14 portant la poignée amovible illustrée sur les figures 1, 4, 5 et 6.
- la figure 16 illustre une variante de réalisation du support de cuisson illustré sur les figures 1 à 3.

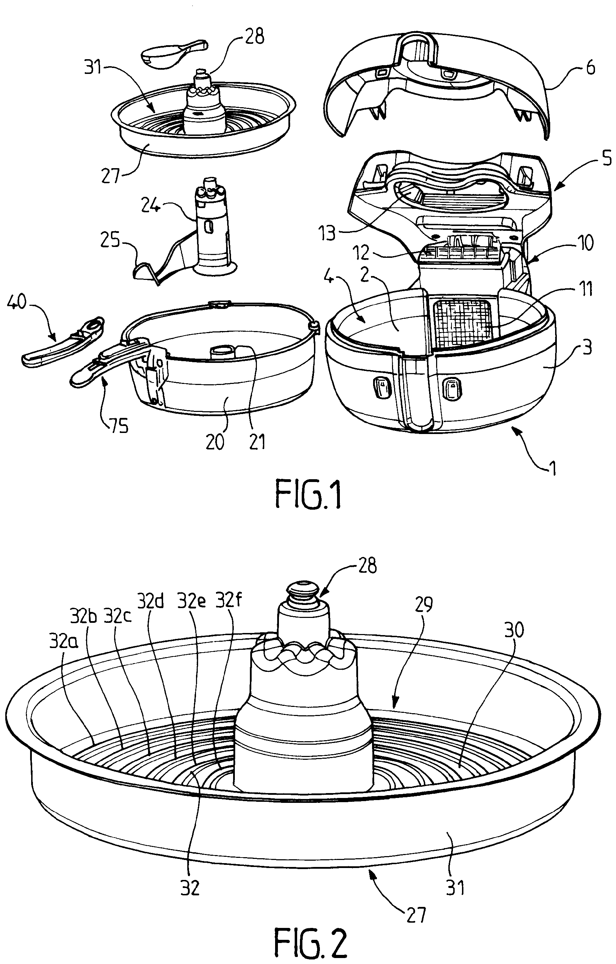

L'appareil électrique de cuisson illustré sur la figure 1 comporte une enceinte de cuisson 2 et un dispositif de chauffe 10 conçu pour générer un flux chauffant dans l'enceinte de cuisson 2, l'enceinte de cuisson 2 logeant un support de cuisson 27 amovible.

L'appareil électrique de cuisson comporte un boîtier 1 comprenant un corps de boîtier 3 présentant une ouverture supérieure 4 et un couvercle 5. L'enceinte de cuisson 2 est ainsi délimitée par le corps de boîtier 3 surmonté du couvercle 5. Une cuve 20 amovible est agencée dans l'enceinte de cuisson 2. La cuve 20 amovible présente un élément de préhension latéral 75 s'étendant hors de l'enceinte de cuisson 2 lorsque la cuve 20 est en place dans le corps de boîtier 3.

Selon la forme de réalisation préférée illustrée sur la figure 1 le couvercle 5 est monté pivotant sur le corps de boîtier 3. Le couvercle 5 comprend un capot 6 amovible réalisé de préférence en matière transparente.

Le dispositif de chauffe 10 est avantageusement logé dans le boîtier 1. Le dispositif de chauffe 10 comprend une entrée d'air 11 reliée par un conduit 12 à une sortie d'air 13 débouchant dans l'enceinte de cuisson 2. Le dispositif de chauffe 10 comprend des moyens de chauffe et des moyens de ventilation, agencés dans le conduit 12, non visibles sur la figure 1.

La cuve 20 présente une cheminée 21 prévue pour recevoir un moyeu 24 d'une pale 25. Le moyeu 24 est entrainé en rotation par des moyens d'entraînement disposés dans le boîtier 1, non visibles sur la figure 1.

Le support de cuisson 27 peut être disposé sur le moyeu 24. Le support de cuisson 27 présente un organe de préhension 28. Le support de cuisson 27 repose sur le moyeu 24 entraîné en rotation.

Selon une caractéristique importante de l'invention, le support de cuisson comporte une ou plusieurs zones de réception d'aliments agencées en périphérie de l'organe de préhension.

Selon l'exemple de réalisation représenté sur les figures 1 à 3, le support de cuisson 27 comporte une zone de réception d'aliment 29 agencée en périphérie de l'organe de préhension 28.

Selon la forme de réalisation préférée illustrée sur les figures 1 à 3, la zone de réception d'aliment 29 est annulaire et entoure l'organe de préhension 28. Le support de cuisson 27 présente avantageusement une configuration circulaire.

Le support de cuisson 27 comporte un bord latéral 31. L'organe de préhension 28 est entouré par le bord latéral 31. L'organe de préhension 28 s'élève plus haut que le bord latéral 31.

Plus particulièrement, l'organe de préhension 28 est agencé en position centrale sur le support de cuisson 27. L'organe de préhension 28 comporte avantageusement une gorge annulaire 36 surmontée d'une collerette 37.

Le support de cuisson 27 comporte un fond 30 entouré par le bord latéral 31 s'élevant à partir du fond 30. Ainsi le bord latéral 31 est relevé.

Avantageusement, la zone de réception d'aliments 29 présente des conformations en relief 32 ménagées sur le fond 30 du support de cuisson 27.

Plus particulièrement, les conformations en relief 32 sont formées par des nervures concentriques 32a, 32b, 32c, 32d, 32e, 32f.

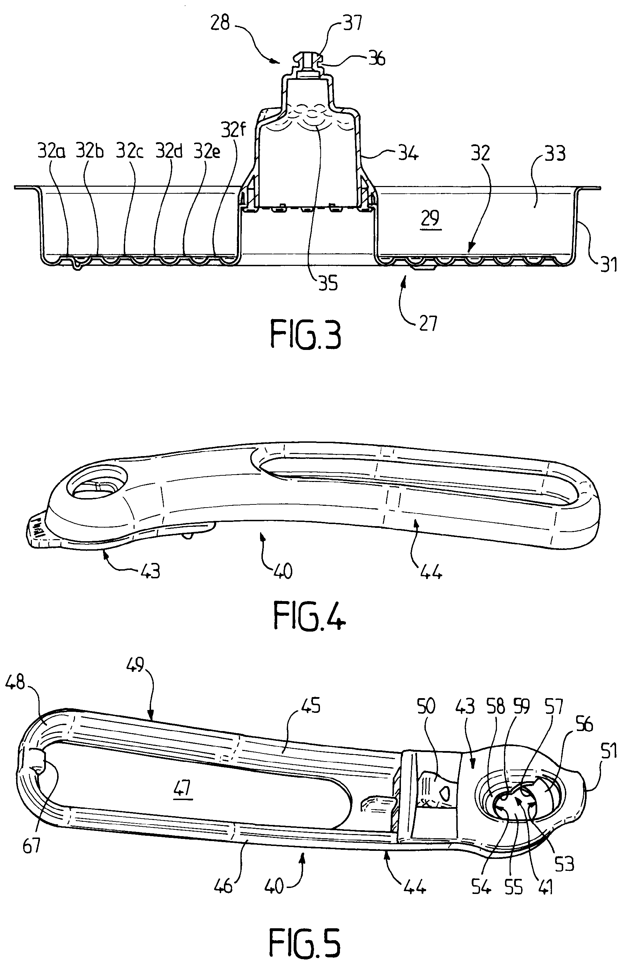

Tel que mieux visible sur la figure 3, la zone de réception d'aliments 29 est formée par un plateau 33 sur lequel est monté un élément central 34 formant l'organe de préhension 28. La partie inférieure de l'élément central 34 forme un organe d'entrainement 35 prévu pour venir en prise avec le moyeu 24 lorsque le support de cuisson 27 repose sur le moyeu 24. L'organe d'entrainement 35 présente avantagement une forme en crénaux arrondis assurant l'entrainement du plateau 33 par le moyeu 24 dans des conditions normales de fonctionnement, tout en permettant un échappement du plateau 33 par rapport au moyeu 24 en cas d'un blocage des aliments contre le couvercle 5 qui empêcherait la rotation du plateau 33. Ainsi l'organe d'entraînement 35 est configuré pour réaliser un entraînement débrayable du plateau 33 en cas de blocage de la rotation du plateau 33.

L'appareil électrique de cuisson comporte une poignée de préhension 40 amovible, mieux visible sur les figures 4 à 6. La poignée de préhension 40 amovible est prévue pour être montée sur l'organe de préhension 28 du support de cuisson 27. La poignée de préhension 40 amovible comporte avantageusement un élément de retenue 41 monté mobile contre un moyen de rappel élastique 42. Plus particulièrement, l'élément de retenue 41 appartient à un coulisseau 43 monté mobile en translation contre le moyen de rappel élastique 42 sur un corps principal 44 de la poignée de préhension 40 amovible. Le corps principal 44 est allongé. Le coulisseau 43 est disposé près d'une extrémité du corps principal 44.

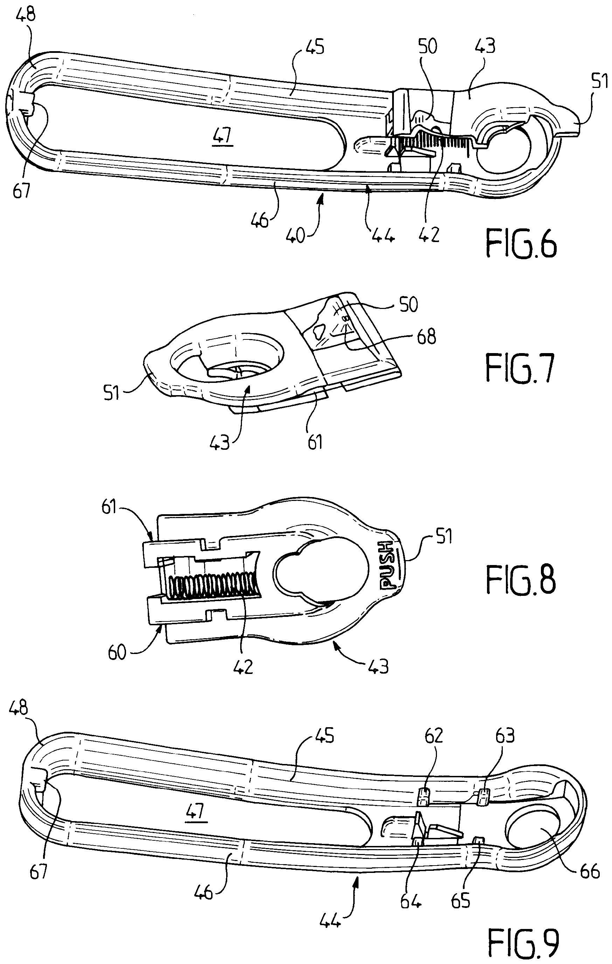

Le coulisseau 43 est monté mobile entre une position de repos, illustrée sur les figures 5 et 6, et une position de dégagement, dans laquelle le moyen de rappel élastique 42 exerce un effort de rappel vers la position de repos.

La poignée de préhension 40 présente deux montants 45, 46 écartés définissant un passage 47. Les deux montants 45, 46 sont reliés par une extrémité 48. Les deux montants 45, 46 appartiennent à une zone de préhension 49 du corps principal 44.

Le coulisseau 43 comporte un organe de manoeuvre supérieur 50 ainsi qu'un organe de manœuvre frontal 51. Le coulisseau 43 est mobile à partir de la position de repos illustrée sur la figure 5 en direction de la zone de préhension 49.

Le corps principal 44 comporte une conformation de retenue 53 et le coulisseau 43 comporte une autre conformation de retenue 54 formant l'élément de retenue 41. La conformation de retenue 53 et l'autre conformation de retenue 54 définissent un passage libre 55 lorsque le coulisseau 43 occupe la position de repos illustrée sur la figure 5.

De manière préférée, la conformation de retenue 53 comporte une face d'appui supérieure 56 et une face d'appui latérale 57 ; l'autre conformation de retenue 54 comporte une autre face d'appui supérieure 58 et une autre face d'appui latérale 59. La face d'appui supérieure 56 et l'autre face d'appui supérieure 58 sont avantageusement planes et la face d'appui latérale 57 et l'autre face d'appui latérale 59 sont avantageusement concaves.

Le coulisseau 43 est agencé sur le corps principal 44 entre la zone de préhension 49 et la conformation de retenue 53.

Tel que visible sur les figures 7 à 9, le coulisseau 43 porte deux rainures latérales 60, 61 opposées et le corps principal 44 porte deux paires d'ergots 62, 63 et deux autres ergots 64, 65 prévus pour coulisser dans les rainures latérales 60, 61. Tel que montré sur la figure 8, le moyen de rappel élastique 42 est porté par le coulisseau 43.

Tel que mieux visible sur la figure 9, la conformation de retenue 53 du corps appartient à une ouverture 66 traversant le corps principal 44. L'ouverture 66 est avantageusement circulaire.

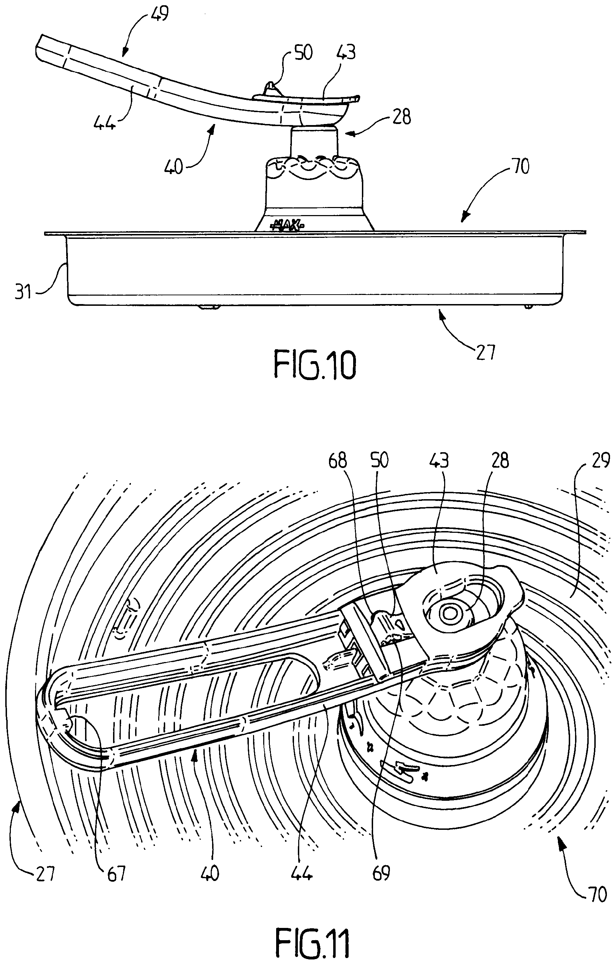

Le support de cuisson 27 appartient à un accessoire de cuisson 70 comportant le support de cuisson 27 et la poignée de préhension 40. Les figures 10 et 11 illustrent l'accessoire de cuisson 70 en configuration assemblée avec la poignée de préhension 40 montée sur l'organe de préhension 28 du support de cuisson 27. Le moyen de rappel (non visible sur les figures 10 et 11) exerce alors un effort de rappel sur le coulisseau 43. Cet effort de rappel permet d'obtenir un effort de serrage sur l'organe de préhension 28.

Tel que visible sur la figure 10, la poignée de préhension 40 amovible montée sur l'organe de préhension 28 s'étend au dessus de la zone de réception d'aliment 29. La poignée de préhension 40 s'étend jusqu'au bord latéral 31 du support de cuisson 27. Le corps principal 44 de la poignée de préhension 40 est relevé à partir de l'extrémité montée sur l'organe de préhension 28, pour écarter la zone de préhension 49 du support de cuisson 27.

L'accessoire de cuisson 70 peut être utilisé dans l'appareil électrique de cuisson illustré sur la figure 1 comportant l'enceinte de cuisson 2, et le support de cuisson 27 agencé dans l'enceinte de cuisson 2.

L'accessoire de cuisson 70 peut être aussi utilisé dans un autre type d'appareil électrique de cuisson, tel que par exemple un four.

L'accessoire de cuisson 70 peut être aussi utilisé dans un ustensile de cuisson tel qu'une casserole ou un faitout.

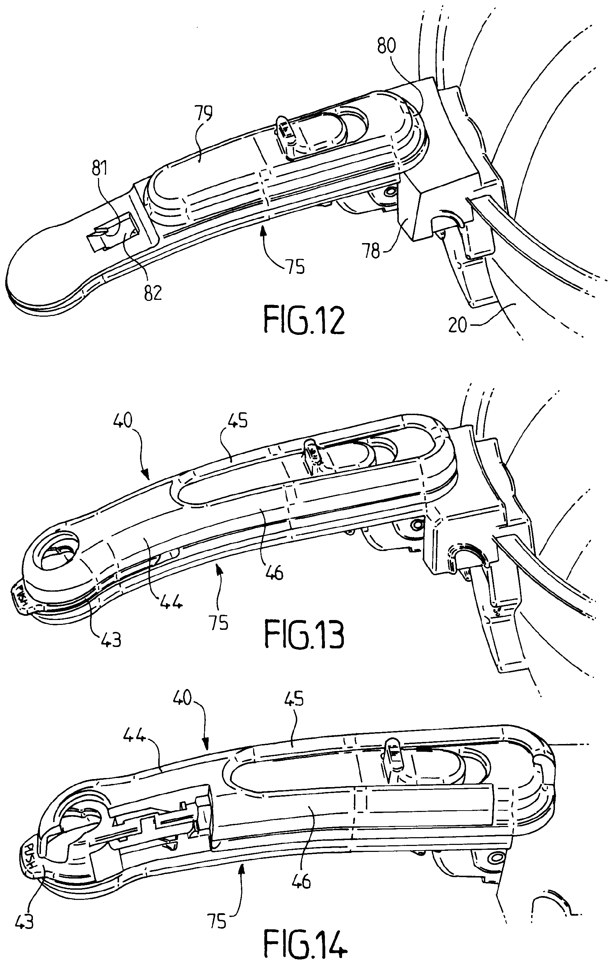

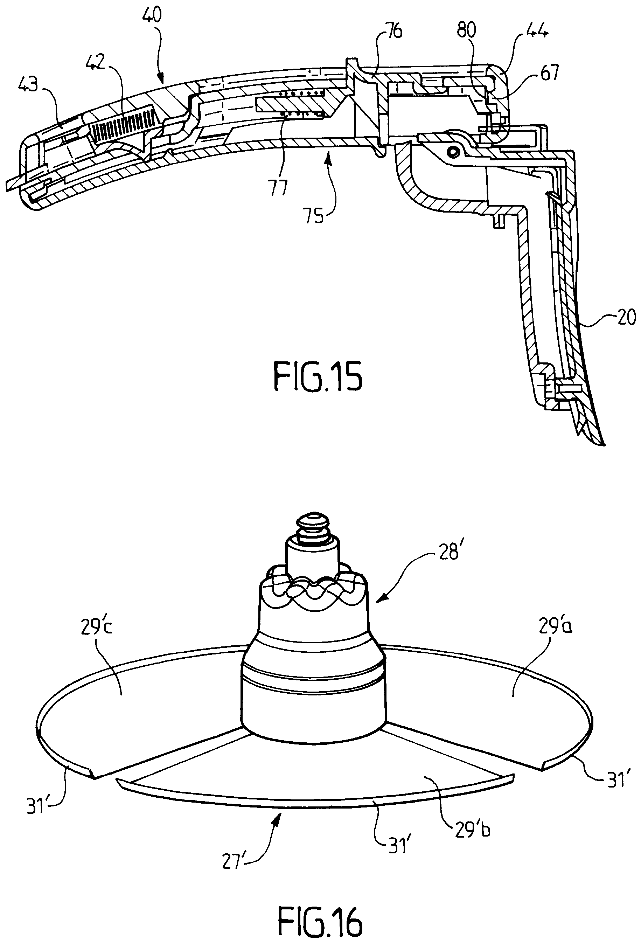

L'élément de préhension latéral 75 est mobile entre une position abaissée et une position relevée, représentée sur les figures 12 à 15. A cet effet l'élément de préhension latéral 75 porte un bouton de blocage en position relevée 76. Tel que visible sur la figure 15, le bouton de blocage en position relevée 76 est monté mobile contre un autre moyen de rappel élastique 77. L'élément de préhension latéral 75 est monté pivotant sur un élément de support 78 fixé à la cuve 20.

Tel que montré sur les figures 12 à 14, l'élément de préhension latéral 75 présente une conformation supérieure 79 prévue pour porter la poignée de préhension 40 amovible prévue pour être montée sur l'organe de préhension 28 du support de cuisson 27.

Tel que montré sur les figures 13 et 14, le bouton de blocage en position relevée 76 de l'élément de préhension latéral 75 s'étend entre les deux montants 45, 46 lorsque l'élément de préhension latéral 75 porte la poignée de préhension 40 amovible. Ainsi le bouton de blocage en position relevée 76 de l'élément de préhension latéral 75 est accessible lorsque l'élément de préhension latéral 75 porte la poignée de préhension 40 amovible.

Pour maintenir en place la poignée de préhension 40 amovible sur l'élément de préhension latéral 75, le corps principal 44 comporte un organe d'accrochage 67, visible sur les figures 5, 6, 9 et 11 et le coulisseau 43 présente un autre organe d'accrochage 68, visible sur les figures 7 et 11. L'organe d'accrochage 67 du corps principal 44 est prévu pour venir en prise avec un organe de retenue 80 de l'élément de préhension latéral 75, visible sur la figure 12, et l'autre organe d'accrochage 68 du coulisseau 43 est prévu pour venir en prise avec un autre organe de retenue 81 de l'élément de préhension 75, également visible sur la figure 12. L'autre organe d'accrochage 68 du coulisseau 43 est avantageusement ménagé sur l'organe de manoeuvre supérieur 50 du coulisseau 43. L'autre organe de retenue 81 est ménagé dans une cavité 82 de l'élément de préhension 75 prévue pour recevoir l'organe de manoeuvre supérieur 50 du coulisseau 43. Si désiré un autre organe d'accrochage complémentaire 69 peut être prévu sur le coulisseau 43 avantageusement à l'opposé de l'autre organe d'accrochage 68, tel que représenté sur la figure 11, l'autre organe d'accrochage complémentaire 69 étant prévu pour venir en prise avec un autre organe de retenue complémentaire 81 de l'élément de préhension 75.

L'accessoire de cuisson 70 s'utilise de la manière suivante.

Pour positionner le support de cuisson 27 dans l'enceinte de cuisson 2 après avoir relevé le couvercle 5, l'utilisateur monte la poignée de préhension 40 amovible sur l'organe de préhension 28 du support de cuisson 27 en déplaçant le coulisseau 43 vers la zone de préhension 49 du corps principal 44 au moyen de l'organe de manœuvre supérieur 50 et en introduisant l'organe de préhension 28 dans le passage libre 55. L'organe de préhension 28 est maintenu par la conformation de retenue 53 du corps principal 44 et par l'autre conformation de retenue 54 du coulisseau 43 sous l'effet du moyen de rappel élastique 42 lorsque l'utilisateur relache l'organe de manœuvre supérieur 50. L'utilisateur peut alors déplacer l'accessoire de cuisson 70 assemblé et positionner le support de cuisson 27 sur le moyeu 24. Pour retirer la poignée de préhension 40 amovible du support de cuisson 27, l'utilisateur déplace le coulisseau 43 vers la zone de préhension 49 du corps principal 44 au moyen de l'organe de manœuvre supérieur 50.

Pour ranger la poignée de préhension 40 amovible sur l'organe de préhension latéral 75, l'utilisateur met en prise l'organe d'accrochage 67 du corps principal 44 avec l'organe de retenue 80 de l'élément de préhension latéral 75 puis repousse le coulisseau 43 avec l'organe de manœuvre frontal 51 pour insérer l'organe de manœuvre supérieur 50 dans la cavité 82. Le relachement du coulisseau 43 bloque l'autre organe d'accrochage 68 du coulisseau 43 derrière l'autre organe de retenue 81 de l'élément de préhension 75 sous l'effet du moyen de rappel élastique 42.

Pour retirer la poignée de préhension 40 amovible de l'organe de préhension latéral 75, l'utilisateur déplace le coulisseau 43 vers la zone de préhension 49 du corps principal 44 au moyen de l'organe de manœuvre frontal 51 et libère ainsi l'autre organe d'accrochage 68 du coulisseau 43 de l'autre organe de retenue 81 de l'élément de préhension 75.

A titre de variante le support de cuisson peut comporter plusieurs zones de réception d'aliments. Avantageusement le support de cuisson comporte entre une et douze zones de réception d'aliments. Le support de cuisson 27' illustré sur la figure 16 diffère du support de cuisson 27 illustré sur la figure 2 en ce que le support de cuisson 27' comporte trois zones de réception d'aliments 29'a, 29'b, 29'c agencées en périphérie de l'organe de préhension 28'. Le support de cuisson 27' est dépourvu de bord latéral. L'organe de préhension 28' est comparable à l'organe de préhension 28. Les trois zones de réception d'aliments 29'a, 29'b, 29'c entourent l'organe de préhension 28'.

Le support de cuisson 27' présente un bord latéral 31' pour chacune des trois zones de réception d'aliments 29'a, 29'b, 29'c. Le bord latéral 31' est ainsi discontinu. Le bord latéral 31' est relevé. L'organe de préhension 28' est entouré au moins partiellement par le bord latéral 31'. L'organe de préhension 28' s'élève plus haut que le bord latéral 31'.

La poignée de préhension 40 amovible est prévue pour être montée sur l'organe de préhension 28' du support de cuisson 27'. La poignée de préhension 40 amovible montée sur l'organe de préhension 28' s'étend au dessus de l'une au moins des zones de réception d'aliments 29'a, 29'b, 29'c. La poignée de préhension 40 amovible montée sur l'organe de préhension 28' s'étend au dessus du bord latéral 31'.

Ainsi le support de cuisson 27 ; 27' comportant une ou plusieurs zones de réception d'aliments 29 ; 29'a, 29'b, 29'c agencées en périphérie de l'organe de préhension 28 ; 28', dans lequel la ou les zones de réception d'aliments 29 ; 29'a, 29'b, 29'c entourent l'organe de préhension 28 ; 28' permet de limiter les efforts de rotation sur la poignée de préhension amovible 40 montée sur l'organe de préhension 28 ; 28' du support de cuisson 27 ; 27'. La mise en place du support de cuisson 27 ; 27' dans l'enceinte de cuisson 2 et le retrait du support de cuisson 27 ; 27' sont facilités.

A titre de variante, l'organe de préhension 28 ; 28' n'est pas nécessairement agencé en position centrale sur le support de cuisson 27 ; 27' et/ou n'est pas nécessairement issu du fond 30 du support de cuisson 27. L'organe de préhension 28 peut notamment être fixé au bord latéral 31 du support de cuisson 27, si désiré en plusieurs points.

A titre de variante, la poignée de préhension 40 amovible ne comporte pas nécessairement un élément de retenue 41 monté mobile contre un moyen de rappel élastique 42. La poignée de préhension amovible peut notamment comporter un organe de support prévu pour soulever l'organe de préhension 28, 28', cet organe de support étant par exemple formé par une fourche. L'organe de préhension 28 ne comporte pas nécessairement une gorge annulaire 36 surmontée d'une collerette 37, mais peut par exemple être formé par une ouverture transversale ou par deux encoches latérales opposées.

A titre de variante, le dispositif de chauffe 10 n'est pas nécessairement agencé dans le boîtier 1 mais peut être agencé au moins partiellement dans l'enceinte de cuisson 2.

A titre de variante, le couvercle 5 n'est pas nécessairement monté pivotant sur le corps de boîtier 3, et peut par exemple être posé sur le corps de boîtier 3.

A titre de variante, l'enceinte de cuisson 2 n'est pas nécessairement délimitée par un corps de boîtier 3 surmonté d'un couvercle 5, et peut par exemple comporter une porte latérale d'accès.

A titre de variante, le support de cuisson 27 ; 27' ne repose pas nécessairement sur le moyeu 24 entraîné en rotation, et peut par exemple reposer sur le corps de boîtier 3.

A titre de variante, le bord latéral 31 ; 31' n'est pas nécessairement relevé.

A titre de variante, le bord latéral 31 ; 31' peut être continu ou discontinu.

A titre de variante, la cuve 20 n'est pas nécessairement agencée de manière amovible dans l'enceinte de cuisson 2. La cuve 20 peut notamment délimiter partiellement l'enceinte de cuisson 2.

La présente invention n'est nullement limitée à l'exemple de réalisation décrit et à ses variantes, mais englobe de nombreuses modifications dans le cadre des revendications.

## Revendications

1. Accessoire de cuisson (70), notamment pour appareil électrique de cuisson, comportant un unique support de cuisson (27 ; 27') et une poignée de préhension (40) amovible, le support de cuisson (27 ; 27') présentant un unique organe de préhension (28 ; 28'), la poignée de préhension (40) amovible étant prévue pour être montée sur l'organe de préhension (28 ; 28') pour soulever le support de cuisson (27 ; 27'), un corps principal (44) de la poignée de préhension (40) amovible étant allongé, le support de cuisson (27 ; 27') comportant une ou plusieurs zones de réception d'aliments (29 ; 29'a, 29'b, 29'c) agencées en périphérie de l'organe de préhension (28 ; 28'), **caractérisé en ce que** la ou les zones de réception d'aliments (29 ; 29'a, 29'b, 29'c) entourent l'organe de préhension (28 ; 28'), et **en ce que** la poignée de préhension (40) amovible montée sur l'organe de préhension (28 ; 28') s'étend au-dessus de la ou de l'une au moins des zones de réception d'aliments (29 ; 29'a, 29'b, 29'c).

2. Accessoire de cuisson (70) selon la revendication 1, **caractérisé en ce que** le support de cuisson (27 ; 27') comporte un bord latéral (31 ; 31') et **en ce que** l'organe de préhension (28 ; 28') est entouré au moins partiellement par le bord latéral (31 ; 31').

3. Accessoire de cuisson (70) selon la revendication 2, **caractérisé en ce que** l'organe de préhension (28 ; 28') s'élève plus haut que le bord latéral (31 ; 31') du support de cuisson (27).

4. Accessoire de cuisson (70) selon l'une des revendications 2 ou 3, **caractérisé en ce que** la poignée de préhension (40) s'étend jusqu'au bord latéral (31) du support de cuisson (27).

5. Accessoire de cuisson (70) selon l'une des revendications 1 à 4, **caractérisé en ce que** l'organe de préhension (28 ; 28') est agencé en position centrale sur le support de cuisson (27 ; 27').

6. Accessoire de cuisson (70) selon l'une des revendications 1 à 5, **caractérisé en ce que** le support de cuisson (27 ; 27') présente une configuration circulaire.

7. Accessoire de cuisson (70) selon l'une des revendications 1 à 6, **caractérisé en ce que** la ou au moins l'une des zones de réception d'aliments (29) présente des conformations en relief (32).

8. Accessoire de cuisson (70) selon la revendication 7, **caractérisé en ce que** les conformations en relief (32) sont formées par des nervures concentriques (32a, 32b, 32c, 32d, 32e, 32f).

9. Accessoire de cuisson (70) selon l'une des revendications 1 à 8, **caractérisé en ce que** la poignée de préhension (40) amovible comporte un élément de retenue (41) monté mobile contre un moyen de rappel élastique (42).

10. Accessoire de cuisson (70) selon la revendication 9, **caractérisé en ce que** l'élément de retenue (41) appartient à un coulisseau (43) monté mobile en translation contre le moyen de rappel élastique (42) sur un corps principal (44) de la poignée de préhension (40) amovible.

11. Accessoire de cuisson (70) selon l'une des revendications 1 à 10, **caractérisé en ce que** le corps principal (44) de la poignée de préhension (40) est relevé à partir de l'extrémité montée sur l'organe de préhension (28).

12. Appareil électrique de cuisson comportant une enceinte de cuisson (2) et un dispositif de chauffe (10) conçu pour générer un flux chauffant dans l'enceinte de cuisson (2), et un accessoire de cuisson (70) selon l'une des revendications 1 à 11, ledit accessoire de cuisson (70) comportant un support de cuisson (27 ; 27') et une poignée de préhension (40) amovible, l'enceinte de cuisson (2) logeant le support de cuisson (27 ; 27') amovible.

13. Appareil électrique de cuisson selon la revendication 12, **caractérisé en ce que** l'enceinte de cuisson (2) est délimitée par un corps de boîtier (3) surmonté d'un couvercle (5).

14. Appareil électrique de cuisson selon la revendication 13, **caractérisé en ce que** le couvercle (5) est monté pivotant sur le corps de boîtier (3).

15. Appareil électrique de cuisson selon l'une des revendications 12 à 14, **caractérisé en ce qu'**une cuve (20) amovible est agencée dans l'enceinte de cuisson (2).

16. Appareil électrique de cuisson selon la revendication 15, **caractérisé en ce que** la cuve (20) amovible présente un élément de préhension latéral (75) s'étendant hors de l'enceinte de cuisson (2).

17. Appareil électrique de cuisson selon la revendication 16, **caractérisé en ce que** l'élément de préhension latéral (75) présente une conformation supérieure (79) prévue pour porter la poignée de préhension (40) amovible.

18. Appareil électrique de cuisson selon l'une des revendications 16 ou 17, **caractérisé en ce que** l'élément de préhension latéral (75) est mobile entre une position abaissée et une position relevée, **en ce que** l'élément de préhension latéral (75) porte un bouton de blocage en position relevée (76) et **en ce que** le bouton de blocage en position relevée (76) de l'élément de préhension latéral (75) est accessible lorsque l'élément de préhension latéral (75) porte la poignée de préhension (40) amovible.

19. Appareil électrique de cuisson selon la revendication 18, **caractérisé en ce que** la poignée de préhension (40) amovible présente deux montants (45, 46) écartés et **en ce que** le bouton de blocage en position relevée (76) de l'élément de préhension latéral (75) s'étend entre les deux montants (45, 46) lorsque l'élément de préhension latéral (75) porte la poignée de préhension (40) amovible.

20. Appareil électrique de cuisson selon l'une des revendications 16 à 19, comportant un accessoire de cuisson (70) selon la revendication 10, **caractérisé en ce que** le corps principal (44) comporte un organe d'accrochage (67) prévu pour venir en prise avec un organe de retenue (80) de l'élément de préhension latéral (75) et **en ce que** le coulisseau (43) présente un autre organe d'accrochage (68) prévu pour venir en prise avec un autre organe de retenue (81) de l'élément de préhension latéral (75).

## Patentansprüche

1. Kochzubehör (70), insbesondere für ein elektrisches Kochgerät, umfassend einen einzigen Kochträger (27; 27') und einem abnehmbaren Griff (40), wobei der Kochträger (27; 27') ein einziges Greifelement (28, 28') aufweist, wobei der abnehmbare Griff (40) dazu vorgesehen ist, an dem Greifelement (28; 28') angebracht zu werden, um den Kochträger (27; 27') anzuheben, wobei ein Hauptkörper (44) des abnehmbaren Griffs (40) länglich ist, wobei der Kochträger (27; 27') eine oder mehrere Lebensmittelaufnahmezonen (29; 29'a, 29'b, 29'c) umfasst, die am Umfang des Greifelements (28; 28') angeordnet sind, **dadurch gekennzeichnet, dass** die Lebensmittelaufnahmezone(n) (29; 29'a, 29'b, 29'c) das Greifelement (28; 28') umgeben, und dass der abnehmbare Griff (40), der an dem Greifelement (28; 28') angebracht ist, sich über die oder mindestens eine der Lebensmittelaufnahmezonen (29; 29'a, 29'b, 29'c) erstreckt.

2. Kochzubehör (70) nach Anspruch 1, **dadurch gekennzeichnet, dass** der Kochträger (27; 27') eine Seitenkante (31; 31') umfasst, und dass das Greifelement (28; 28') zumindest teilweise von der Seitenkante (31; 31') umgeben ist.

3. Kochzubehör (70) nach Anspruch 2, **dadurch gekennzeichnet, dass** das Greifelement (28; 28') höher als die Seitenkante (31; 31') des Kochträgers (27) ansteigt.

4. Kochzubehör (70) nach einem der Ansprüche 2 oder 3, **dadurch gekennzeichnet, dass** sich der Griff (40) bis zu der Seitenkante (31) des Kochträgers (27) erstreckt.

5. Kochzubehör (70) nach einem der Ansprüche 1 bis 4, **dadurch gekennzeichnet, dass** das Greifelement (28; 28') in einer zentralen Position auf dem Kochträger (27; 27') angeordnet ist.

6. Kochzubehör (70) nach einem der Ansprüche 1 bis 5, **dadurch gekennzeichnet, dass** der Kochträger (27; 27') eine kreisförmige Konfiguration aufweist.

7. Kochzubehör (70) nach einem der Ansprüche 1 bis 6, **dadurch gekennzeichnet, dass** die oder mindestens eine der Lebensmittelaufnahmezonen (29) Reliefgestaltungen (32) aufweist.

8. Kochzubehör (70) nach Anspruch 7, **dadurch gekennzeichnet, dass** die Reliefgestaltungen (32) durch konzentrische Rippen (32a, 32b, 32c, 32d, 32e, 32f) gebildet sind.

9. Kochzubehör (70) nach einem der Ansprüche 1 bis 8, **dadurch gekennzeichnet, dass** der abnehmbare Griff (40) ein Rückhalteelement (41) umfasst, das gegen ein elastisches Rückstellmittel (42) beweglich angebracht ist.

10. Kochzubehör (70) nach Anspruch 9, **dadurch gekennzeichnet, dass** das Rückhalteelement (41) zu einem Schlitten (43) gehört, der gegen das elastische Rückstellmittel (42) an einem Hauptkörper (44) des abnehmbaren Griffs (40) translationsbeweglich angebracht ist.

11. Kochzubehör (70) nach einem der Ansprüche 1 bis 10, **dadurch gekennzeichnet, dass** der Hauptkörper (44) des Griffs (40) ausgehend von dem Ende, das auf dem Griffelement (28) angebracht ist, erhöht ist.

12. Elektrisches Kochgerät, umfassend einen Kochraum (2) und eine Heizvorrichtung (10), die dazu ausgelegt ist, einen Heizstrom in dem Kochraum (2) zu erzeugen, und ein Kochzubehör (70) nach einem der Ansprüche 1 bis 11, wobei das Kochzubehör (70) einen Kochträger (27; 27') und einen abnehmbaren Griff (40) aufweist, wobei der Kochraum (2) den abnehmbaren Kochträger (27; 27') aufnimmt.

13. Elektrisches Kochgerät nach Anspruch 12, **dadurch gekennzeichnet, dass** der Kochraum (2) durch einen Gehäusekörper (3) begrenzt ist, der von einer Abdeckung (5) überragt wird.

14. Elektrisches Kochgerät nach Anspruch 13, **dadurch gekennzeichnet, dass** die Abdeckung (5) schwenkbar an dem Gehäusekörper (3) angebracht ist.

15. Elektrisches Kochgerät nach einem der Ansprüche 12 bis 14, **dadurch gekennzeichnet, dass** ein abnehmbares Gefäß (20) in dem Kochraum (2) angeordnet ist.

16. Elektrisches Kochgerät nach Anspruch 15, **dadurch gekennzeichnet, dass** das abnehmbare Gefäß (20) ein seitliches Greifelement (75) aufweist, das sich außerhalb des Kochraums (2) erstreckt.

17. Elektrisches Kochgerät nach Anspruch 16, **dadurch gekennzeichnet, dass** das seitliche Greifelement (75) eine obere Gestaltung (79) aufweist, die dazu vorgesehen ist, den abnehmbaren Griff (40) zu tragen.

18. Elektrisches Kochgerät nach einem der Ansprüche 16 oder 17, **dadurch gekennzeichnet, dass** das seitliche Greifelement (75) zwischen einer abgesenkten Position und einer angehobenen Position beweglich ist, dass das seitliche Greifelement (75) einen Blockierknopf in der angehobenen Position (76) trägt, und dass der Blockierknopf in der angehobenen Position (76) des seitlichen Greifelements (75) zugänglich ist, wenn das seitliche Greifelement (75) den abnehmbaren Griff (40) trägt.

19. Elektrisches Kochgerät nach Anspruch 18, **dadurch gekennzeichnet, dass** der abnehmbare Griff (40) zwei Pfosten (45, 46) aufweist, die voneinander beabstandet sind, und dass der Blockierknopf in der angehobenen Position (76) des seitlichen Greifelements (75) sich zwischen den beiden Pfosten (45, 46) erstreckt, wenn das seitliche Greifelement (75) den abnehmbaren Griff (40) trägt.

20. Elektrisches Kochgerät nach einem der Ansprüche 16 bis 19, umfassend ein Kochzubehör (70) nach Anspruch 10, **dadurch gekennzeichnet, dass** der Hauptkörper (44) ein Hakenelement (67) umfasst, das dazu vorgesehen ist, mit einem Rückhalteelement (80) des seitlichen Greifelements (75) in Eingriff zu gelangen, und dass der Schlitten (43) ein weiteres Hakenelement (68) aufweist, das dazu vorgesehen ist, mit einem weiteren Rückhalteelement (81) des seitlichen Greifelements (75) in Eingriff zu gelangen.

## Claims

1. Cooking accessory (70), particularly for an electric cooking appliance, comprising a single cooking support (27; 27') and a removable gripping handle (40), the cooking support (27; 27') having a single gripping member (28; 28'), where the removable gripping handle (40) is intended to be mounted on the gripping member (28; 28') to lift the cooking support (27; 27'), where a main body (44) of the removable gripping handle (40) is elongated, where the cooking support (27; 27') comprises one or more food reception areas (29; 29'a, 29'b, 29'c) arranged at the periphery of the gripping member (28; 28'), **characterised in that** the food reception area or areas (29; 29'a, 29'b, 29'c) surround the gripping member (28; 28'), and **in that** the removable gripping handle (40) mounted on the gripping member (28; 28') extends above the, or at least one of the, food reception areas (29; 29'a, 29'b, 29'c).

2. Cooking accessory (70) according to claim 1, **characterised in that** the cooking support (27; 27') comprises a lateral edge (31; 31') and **in that** the gripping member (28; 28') is at least partially surrounded by the lateral edge (31; 31').

3. Cooking accessory (70) according to claim 2, **characterised in that** the gripping member (28; 28') rises higher than the lateral edge (31; 31') of the cooking support (27).

4. Cooking accessory (70) according to either of claims 2 or 3, **characterised in that** the gripping handle (40) extends to the lateral edge (31) of the cooking support (27).

5. Cooking accessory (70) according to one of claims 1 to 4, **characterised in that** the gripping member (28; 28') is arranged in a central position of the cooking support (27; 27').

6. Cooking accessory (70) according to one of claims 1 to 5, **characterised in that** the cooking support (27; 27') has a circular configuration.

7. Cooking accessory (70) according to one of claims 1 to 6, **characterised in that** the, or at least one of the, food reception areas (29) has conformations in relief (32).

8. Cooking accessory (70) according to claim 7, **characterised in that** the conformations in relief (32) are formed by concentric ribs (32a, 32b, 32c, 32d, 32e, 32f).

9. Cooking accessory (70) according to one of claims 1 to 8, **characterised in that** the removable gripping handle (40) comprises a retaining member (41) mounted movable against an elastic return means (42).

10. Cooking accessory (70) according to claim 9, **characterised in that** the retaining member (41) is part of a sliding member (43) mounted movable in translation against the elastic return means (42) on a main body (44) of the removable gripping handle (40).

11. Cooking accessory (70) according to one of claims 1 to 10, **characterised in that** the main body (44) of the gripping handle (40) projects upward from the end mounted on the gripping member (28).

12. Electric cooking appliance comprising a cooking chamber (2) and a heating device (10) designed to generate a heating flow in the cooking chamber (2), and a cooking accessory (70) according to one of claims 1 to 11, said cooking accessory (70) comprising a cooking support (27; 27') and a removable gripping handle (40), where the cooking chamber (2) houses the removable cooking support (27; 27').

13. Electric cooking appliance according to claim 12, **characterised in that** the cooking chamber (2) is delimited by a housing body (3) surmounted by a lid (5).

14. Electric cooking appliance according to claim 13, **characterised in that** the lid (5) is mounted pivotable on the housing body (3).

15. Electric cooking appliance according to one of claims 12 to 14, **characterised in that** a removable container (20) is arranged inside the cooking chamber (2).

16. Electric cooking appliance according to claim 15, **characterised in that** the removable container (20) has a lateral gripping member (75) extending outside the cooking chamber (2).

17. Electric cooking appliance according to claim 16, **characterised in that** the lateral gripping member (75) has an upper conformation (79) provided to support the removable gripping handle (40).

18. Electric cooking appliance according to either of claims 16 or 17, **characterised in that** the lateral gripping member (75) is movable between a lowered position and a raised position, **in that** the lateral gripping member (75) has a button (76) for locking in a raised position and **in that** the button (76) for locking the lateral gripping member (75) in a raised position is accessible when the lateral gripping member (75) carries the removable gripping handle (40).

19. Electric cooking appliance according to claim 18, **characterised in that** the removable gripping handle (40) has two separated uprights (45, 46) and **in that** the button (76) for locking the lateral gripping member (75) in a raised position extends between the two uprights (45, 46) when the lateral gripping member (75) carries the removable gripping handle (40).

20. Electric cooking appliance according to one of claims 16 to 19, comprising a cooking accessory (70) according to claim 10, **characterised in that** the main body (44) comprises a hooking member (67) intended to engage with a retention member (80) of the lateral gripping member (75) and **in that** the slide (43) has another hooking member (68) intended to engage with another retention member (81) of the lateral gripping element (75).
